# EUROPÄISCHE PATENTSCHRIFT

(11) **EP 1 194 723 B1**
(45) Veröffentlichungstag und Bekanntmachung des Hinweises auf die Patenterteilung: **04.12.2002**
(21) Anmeldenummer: 00951326.8
(22) Anmeldetag: 01.07.2000
(51) Int. Cl.: F24J 3/08

(54) **VORRICHTUNG ZUR NUTZUNG VON ERDWÄRME UND VERFAHREN ZU DEREN BETREIBUNG**
DEVICE FOR UTILIZING GEOTHERMAL HEAT AND METHOD FOR OPERATING THE SAME
DISPOSITIF PERMETTANT D'UTILISER L'ENERGIE GEOTHERMIQUE ET SON PROCEDE DE FONCTIONNEMENT

(30) Priorität: 09.07.1999 DE 19932001; 04.11.1999 DE 19953072
(43) Veröffentlichungstag der Anmeldung: 10.04.2002
(73) Patentinhaber: Klett-Ingenieur-GmbH, 70736 Fellbach (DE)
(72) Erfinder: HAMANN, Jochen, D-01612 Diesbar-Seusslitz (DE)
(74) Vertreter: Daub, Nicole
(86) Internationale Anmeldenummer: EP0006163
(87) Internationale Veröffentlichungsnummer: WO01004550

(56) Entgegenhaltungen:
- DE-A- 1 601 325
- DE-A- 3 006 380
- FR-A- 2 482 272
- US-A- 4 644 750

## Beschreibung

### Stand der Technik

Die Erfindung geht aus von einer Vorrichtung nach dem Oberbegriff des Anspruchs 1.

Ein aus dem Erdinneren strömender Wärmefluß ist zu ca. 80% auf den Zerfall radioaktiver Isotope in Gesteinen und zu ca. 20% auf die Ursprungswärme bei der Erdentstehung zurückzuführen. Die Temperatur von der Erdoberfläche zum Erdinneren nimmt je 1000 m um ca. 30°C zu. Im Bereich von geothermischen Anomalien können größere Temperaturzunahmen auftreten, beispielsweise infolge einer geographischen Nähe zu heißen Magmakammern in der Erdkruste (Intrusionen), Strömungen von Tiefengewässern usw. Derartige Gebiete werden insbesondere zur Nutzung der Erdwärme bevorzugt.

Die Erdwärme kann in verschiedenen Stoffen gespeichert sein, und zwar grundsätzlich in Wasserdampf, in Wasser und/oder in heißen Gesteinsschichten.

Gespeicherter Wasserdampf befindet sich meist in der Nähe von tätigen Vulkanen und stark zerklüfteten bzw. wasserführenden Grundgesteinen. Der Dampf kann zur Erdoberfläche geleitet und - nach einer oft notwendigen Separation von mitgerissenem Wasser - zur Stromerzeugung genutzt werden. Nutzbare Dampfquellen sind jedoch nur in wenigen Gebieten vorhanden.

Die in Erdschichten im heißen Wasser gespeicherte Energie wird in der Regel mit einer als Dublette bezeichneten Vorrichtung erschlossen. Die Dublette besitzt eine Förderbohrung, über die das heiße Wasser aus den entsprechenden Erdschichten an die Erdoberfläche gefördert werden kann. Um zu vermeiden, daß der hydrostatische Druck in den Erdschichten mit der Zeit absinkt, der Zustrom des heißen Wassers zurückgeht und um insbesondere die Wärme des Gesteins besser nutzen zu können, wird über eine Injektionsbohrung das abgekühlte Wasser in die entsprechenden Erdschichten zurückgeführt. Das Wasser kann von der Injektionsbohrung durch das Gestein zur Förderbohrung fließen und wird dabei erwärmt. Das aus den Erdschichten geförderte Wasser wird in der Regel zur Raumheizung genutzt.

Zur Erschließung der in heißen Gesteinsschichten gespeicherten Energie ist ein sogenanntes Hot-Dry-Rock-Verfahren bekannt. Bei diesem Verfahren wird in einem ersten Verfahrensschritt eine erste Tiefenbohrung von ca. 5000 m gebohrt. Über die Tiefenbohrung wird Wasser mit hohem Druck in ca. 5000 m Tiefe in das Gestein gepreßt, so daß sich Risse im Gestein bilden. Mit einer zweiten Tiefenbohrung wird in einem Abstand von ca. 500 m der Bereich angebohrt, in dem sich die Risse ausgebildet haben. Anschließend kann Wasser über eine Tiefenbohrung in .das Gestein gepumpt, durch die Risse zur zweiten Tiefenbohrung geleitet und über die zweite Tiefenbohrung erwärmt zur Erdoberfläche gefördert werden. Um kostenintensive Fehlbohrungen zu vermeiden, sollten die Risse im Gestein geortet werden. Dies ist in der Tiefe von 5000 m besonders schwierig und aufwendig.

Ferner ist eine Vorrichtung mit drei konzentrisch angeordneten Rohren bekannt, und zwar mit einem sogenannten äußeren Fallrohr, einem Hüllrohr und einem inneren Steigrohr. Kaltes Wasser wird durch das Fallrohr nach unten ins Erdinnere gepumpt, erwärmt und durch das Steigrohr erwärmt nach oben gefördert. Ein Ringspalt mit Luft zwischen dem Steigrohr und dem Hüllrohr dient als Isolierung zwischen dem äußeren Fallrohr und dem inneren Steigrohr. Die Rohre sind nach außen zum Erdreich von einer wasserundurchlässigen Suspension umgeben, beispielsweise von Betonit. Ein Stoffaustausch mit dem Erdreich wird vermieden. Der Wirkungsgrad zur Erzeugung von elektrischer Energie ist jedoch gering.

Aus der US 4,644,750 ist eine gattungsbildende Vorrichtung bekannt, bei der mit einer Pumpe ein Arbeitsstoff über ein erstes Rohr in eine Tiefbohrung nach unten ins Erdreich und über Kapillare nach oben gefördert wird. Über die Kapillarwirkung wird versucht, die Fremdleistung zur Förderung des Arbeitsstoffes von unten nach oben möglichst gering zu halten.

Der Erfindung liegt die Aufgabe zugrunde, die gattungsgemäße Vorrichtung weiterzuentwickeln und insbesondere eine Vorrichtung und ein Verfahren zu schaffen, mit denen kostengünstig und technisch einfach realisierbar ein Kreisprozeß zur Gewinnung von Energie geschaffen werden kann, der ohne oder mit sehr geringer Fremdleistung aufrechterhalten bleibt. Sie wird gemäß der Erfindung durch die Merkmale des Anspruchs 1 gelöst. Weitere Ausgestaltungen ergeben sich aus den Unteransprüchen.

### Vorteile der Erfindung

Die Erfindung geht aus von einer Vorrichtung zur Nutzung von Erdwärme mit zumindest einem ersten Kanal, durch den ein Arbeitsstoff nach unten ins Erdinnere und mit zumindest einem zweiten Kanal, durch den der Arbeitsstoff nach oben, in Richtung Erdoberfläche geleitet wird, wobei der erste und der zweite Kanal ein zum Erdreich geschlossenes System bilden.

Es wird vorgeschlagen, daß der Arbeitsstoff über zumindest einen Drosselbereich nach unten ins Erdinnere geleitet ist und der Drosselbereich den in Strömungsrichtung vor dem Drosselbereich weitgehend flüssigen Arbeitsstoff auf einen Verdampfungsdruck drosselt, so daß der Arbeitsstoff nach dem Drosselbereich weitgehend vollständig verdampfbar ist. Der Arbeitsstoff kann vorteilhaft im flüssigen Zustand nach unten und im gasförmigen Zustand, mit geringer Dichte nach oben geführt werden. Der sich aufbauende Flüssigkeitsdruck bzw. die auf die Flüssigkeit wirkende Schwerkraft kann für eine erforderliche Druckerhöhung in einem rechtsläufigen Kreisprozeß genutzt werden, wodurch ein besonders hoher Wirkungsgrad, insbesondere bei der Erzeugung elektrischer Energie erreichbar ist. Grundsätzlich kann jedoch zur Erzeugung eines erforderlichen Drucks vor dem Drosselbereich auch eine Pumpe verwendet werden, die unterstützend zur Flüssigkeitssäule wirkt oder allein den erforderlichen Druck erzeugt.

Wird der Arbeitsstoff nach dem Drosselbereich weitgehend, vorteilhaft vollständig verdampft, so strömt dieser nach oben zur Erdoberfläche. Während des Betriebs der Vorrichtung kann das Einbringen einer Fremdleistung, insbesondere einer Pumpenleistung, vermieden und damit der Wirkungsgrad gesteigert werden. Im zweiten Kanal stellt sich in der Gassäule von unten nach oben ein geringer Druckabfall ein. An der Erdoberfläche besitzt der dampfförmige Arbeitsstoff einen weit höheren Druck als in einem Ausgangszustand des Prozesses, der besonders vorteilhaft zur Erzeugung elektrischer Energie genutzt werden kann. Der Drosselbereich kann von einer oder vorteilhaft von mehreren Drosselstellen gebildet sein, die in Strömungsrichtung mit jeweils einem Abstand zueinander angeordnet sind. Mit mehreren Drosselstellen kann ein besonders hoher Druck im oberen Bereich des zweiten Kanals erreicht werden.

In einer weiteren Ausgestaltung der Erfindung wird vorgeschlagen, daß in Strömungsrichtung nach dem zweiten Kanal ein Verdichter angeordnet ist, über den der Arbeitsstoff vor dem Drosselbereich komprimierbar ist. Der Drosselbereich kann besonders vorteilhaft im oberen Bereich des ersten Kanals angeordnet werden und es kann vorteilhaft über den gesamten ersten Kanal eine große Temperaturdifferenz zwischen dem Arbeitsstoff und dem Erdinneren und dadurch ein guter Wärmeübergang vom Erdinneren auf den Arbeitsstoff erreicht werden. Die vom Erdinneren zugeführte Energie kann vorteilhaft bei weitgehend konstanter Verdampfungstemperatur des Arbeitsstoffes zur Verdampfung genutzt werden. Im zweiten Kanal besitzt der Arbeitsstoff weitgehend die gleiche Temperatur wie im ersten Kanal, wodurch eine Isolierung zwischen den Kanälen eingespart werden kann. Zur Gewinnung einer großen Wärmemenge kann bereits eine geringe Bohrtiefe ausreichen.

Der Drosselbereich kann grundsätzlich von einer oder mehreren, dem Fachmann als geeignet erscheinenden Drosselstellen gebildet sein. Besonders vorteilhaft wird jedoch zumindest eine Drosselstelle von wenigstens einem Rohr gebildet. Es kann bei einer ausreichenden Drosselwirkung eine relativ geringe Strömungsgeschwindigkeit durch die Drosselstelle und damit ein geringer Verschleiß und eine hohe Lebensdauer erreicht werden.

In einer Ausgestaltung der Erfindung wird vorgeschlagen, daß der erste und der zweite Kanal zu einem geschlossenen System verbunden, d.h. nicht nur unterhalb der Erdoberfläche, sondern auch oberhalb der Erdoberfläche geschlossen verbunden sind. Ein Austritt des Arbeitsstoffs aus dem System kann vermieden und es kann vorteilhaft ein Arbeitsstoff verwendet werden, mit dem bei möglichst geringen Kosten ein besonders hoher Wirkungsgrad erreichbar ist.

Besitzt der Arbeitsstoff eine niedrigere Siedetemperatur als Wasser, kann im Vergleich zu wasserbetriebenen Vorrichtungen der Arbeitsstoff bereits bei geringeren Tiefen bzw. geringeren Temperaturen zum Verdampfen gebracht werden, wodurch insbesondere Bohrkosten eingespart werden können. Als Arbeitsstoff eignen sich vorteilhaft gebräuchliche Kältemittel, wie insbesondere Ammoniak.

Um im ersten Kanal die Strömungsgeschwindigkeit zu reduzieren und die Oberfläche zu vergrößern und dadurch den Wärmeübergang auf den Arbeitsstoff zu verbessern, ist vorteilhaft im ersten Kanal zumindest nach dem Drosselbereich wenigstens ein den Arbeitsstoff umlenkendes Element eingebracht. In den ersten Kanal können vorteilhaft Füllkörper eingebracht werden, die den Arbeitsstoff umlenken. In einer weiteren Ausgestaltung wird vorgeschlagen, daß anstatt Füllkörper zumindest eine spiralförmig nach unten verlaufende Bahn eingebracht ist, über die der Arbeitsstoff an die Außenwand des ersten Kanals geleitet ist, wodurch eine vorteilhafte Filmverdampfung an der Außenwand des ersten Kanals erreicht werden kann. Die Bahn kann aus verschiedenen Materialien hergestellt sein, beispielsweise kann die Bahn von einem Blechteil gebildet oder kann auch einstückig mit einer Kanalwand ausgebildet sein. Die Bahn besitzt vorzugsweise keine abdichtende Funktion im Kanal.

In einer Ausgestaltung der Erfindung sind der erste und der zweite Kanal in einer stoffdicht ausgekleideten Tiefenbohrung angeordnet und der Arbeitsstoff wird im radial äußeren Bereich innerhalb der Tiefenbohrung nach unten und im radial inneren Bereich der Tiefenbohrung durch ein Innenrohr nach oben geleitet. Zusätzliche Tiefenbohrungen und damit verbundene Kosten können eingespart werden. Ferner können die Kanäle besonders einfach und kostengünstig unter der Erdoberfläche geschlossen miteinander verbunden werden. Grundsätzlich kann der Arbeitsstoff jedoch auch über eine oder mehrere Tiefenbohrungen nach unten und über eine oder mehrere, davon getrennte Tiefenbohrungen nach oben geleitet werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Vorrichtung und
- Fig. 2: Verfahrensabläufe in einem Druck-Enthalpie-Diagramm und
- Fig. 3: eine Variante zu Fig. 1.

### Beschreibung des Ausführungsbeispiels

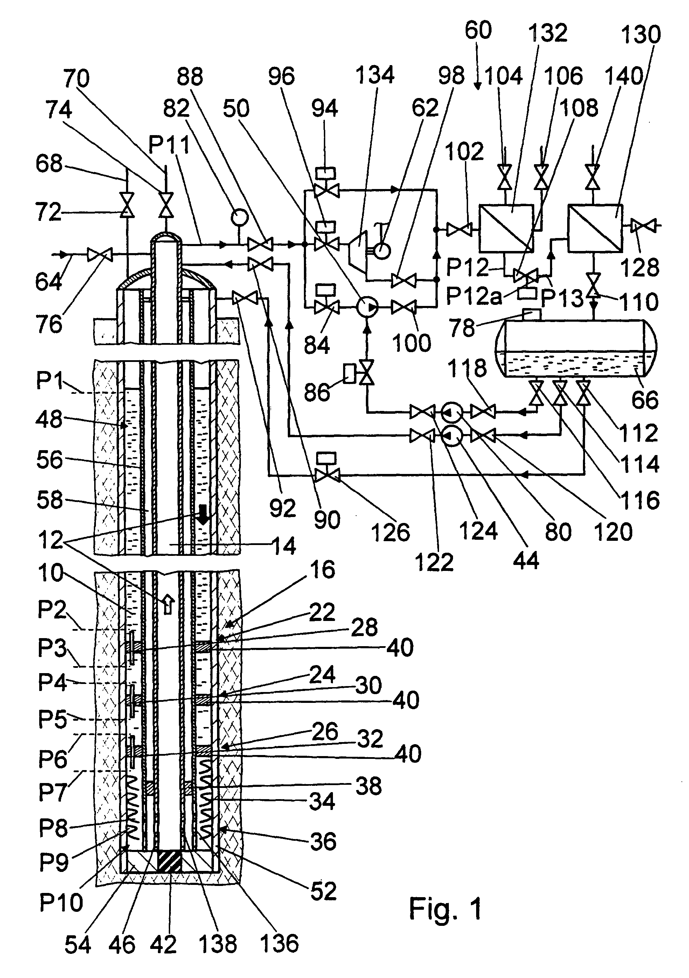

Fig. 1 zeigt eine erfindungsgemäße Vorrichtung zur Nutzung von Erdwärme mit einem ersten Kanal 10, durch den ein Arbeitsstoff 12 nach unten ins Erdinnere und mit einem zweiten Kanal 14, durch den der Arbeitsstoff 12 nach oben, in Richtung Erdoberfläche geleitet wird. Der erste Kanal 10 wird von einem ersten Außenrohr 52 gebildet, das in eine Tiefenbohrung 36 eingefügt ist und die Tiefenbohrung 36 nach außen stoffdicht auskleidet. Das Außenrohr 52 ist am unteren Ende, an seiner Stirnseite dicht verschlossen. Der zweite Kanal 14 wird von einem im radial inneren Bereich der Tiefenbohrung 36, konzentrisch zum Außenrohr 52 angeordneten Innenrohr 46 gebildet. Das Innenrohr 46 ist von einem Hüllrohr 56 umgeben, das zur Isolierung einen Ringspalt 58 mit Luft zum Innenrohr 46 einschließt und den ersten Kanal 10 radial nach innen begrenzt. Der erste und der zweite Kanal 10, 14 sind gemeinsam mit einer Anlage 60 zu einem geschlossenen System verbunden, so daß der als Arbeitsstoff 12 verwendete Ammoniak nicht nach außen treten kann.

Erfindungsgemäß besitzt der erste Kanal 10 einen Drosselbereich 16 mit drei in Strömungsrichtung hintereinander geschalteten Drosselstellen 22, 24, 26. Die Drosselstellen 22, 24, 26 sind jeweils mit einem Abstand zueinander angeordnet und werden jeweils von einem in einem Flansch 40 befestigten Rohr 28, 30, 32 gebildet.

Beim Aufbau der Vorrichtung werden das Außenrohr 52, das Hüllrohr 56 und das Innenrohr 46 beim Bohren der Tiefenbohrung 36 in Teilstücken bereits konzentrisch mit eingeführt. Die Teilstücke werden an den axialen Stoßstellen durch Schweißen dicht miteinander verbunden. Grundsätzlich können die Teilstücke jedoch auch durch verschiedene, dem Fachmann als sinnvoll erscheinende Verfahren stoffschlüssig, formschlüssig und/oder kraftschlüssig dicht verbunden werden.

Der Flansch 40 kann mit verschiedenen, dem Fachmann als geeignet erscheinenden Verfahren zwischen dem Außenrohr 52 und dem Hüllrohr 56 befestigt werden. Besonders vorteilhaft wird dieser jedoch bereits vor dem Einführen der Rohre 46, 52, 56 in die Tiefenbohrung 36 am Außenrohr 52 und am Hüllrohr 56 festgeschweißt. Um zu vermeiden, daß der erste Kanal 10 beim Bohren verschmutzt bzw. um zu vermeiden, daß Bohrschlamm und/oder eine Suspension in den ersten Kanal 10 läuft, ist der erste Kanal 10 im untersten Teilstück bereits vor dem Einführen in die Tiefenbohrung 36 an der axialen Stirnseite mit einer Stahlplatte 54 verschlossen. Ein Bohrkopf einer nicht näher dargestellten Bohrvorrichtung kann im zusammengeklappten Zustand durch das Innenrohr 46 nach oben und nach unten geführt werden. Der zweite Kanal 14 kann nach Abschluß des Bohrvorgangs gereinigt werden. Nach Fertigstellung der Tiefenbohrung 36 wird das Innenrohr 46 an seiner nach unten weisenden axialen Stirnseite mit einer Kunststoffplatte 42 zum Erdreich dicht verschlossen. Daneben kann die axiale Stirnseite des Innenrohrs 46 mit sämtlichen, dem Fachmann als geeignet erscheinenden Verfahren zum Erdreich dicht verschlossen werden, beispielsweise durch Ausgießen und/oder durch Einpressen eines Teflonkörpers, wodurch ein kraft- und formschlüssiger Verschluß geschaffen werden könnte usw. Ferner ist möglich, das Hüllrohr 56 und/oder das Innenrohr 46 erst nachträglich in ein Außenrohr einzuführen, das an seiner nach unten weisenden Stirnseite dicht verschlossen ist.

Vor dem Einbringen des Innenrohrs 46 und des Hüllrohrs 56, werden in deren untersten Teilstücke Öffnungen 136, 138 bzw. Bohrungen eingebracht. Die Öffnungen 138 im Innenrohr 46 werden anschließend vor dem Einführen wieder kraft- und formschlüssig oder in geeigneter Weise verschlossen, so daß sie einerseits eine Verunreinigung der Hohlräume zwischen den Rohren 46, 52, 56 sicher verhindern und andererseits durch den beim Befüllen mit Ammoniak entstehenden Druckunterschied zwischen dem ersten Kanal 10 und dem zweiten Kanal 14 wieder frei werden. Die Öffnungen 136, 138 oder nur die Öffnungen 138 können jedoch auch nachträglich, nach dem Einführen der Rohre 46, 52, 56 eingebracht werden oder können mit Stoffen verschlossen werden, die sich in Ammoniak chemisch auflösen, jedoch gegen die bei der Herstellung der Bohrung verwendeten Substanzen beständig sind.

Zu Beginn der Inbetriebnahme sind sämtliche Ventile 72, 74, 76 und 84 bis 128, 140 geöffnet. Um den ersten Kanal 10 möglichst schnell vollständig mit flüssigem Ammoniak zu füllen, wird flüssiges Ammoniak mit ca. 25 bar über eine Leitung 64 und über den zweiten Kanal 14 in die Vorrichtung geleitet. Ist im ersten Kanal 10 nur eine Drosselstelle angeordnet, kann die Vorrichtung auch über den ersten Kanal 10 befüllt werden. Die Vorrichtung wird über Leitungen 68, 70 entlüftet, die in einem nicht näher dargestellten Wasserbad münden. Steigen im Wasserbad keine Luftblasen mehr nach oben, können die Ventile 72, 74 in den Leitungen 68, 70 geschlossen werden. Wird ein bestimmter Füllstand mit einem Füllstandsmesser 78 in einem Kondensatspeicher 66 erfaßt, wird das Ventil 76 in der Leitung 64 geschlossen. Ferner werden die Ventile 94, 96 und 98 geschlossen.

Anschließend wird über eine Strahlpumpe 50, die von einer Treibstrahlpumpe 80 mit Ammoniak aus dem Kondensatspeicher 66 beschickt wird, der Druck p im zweiten Kanal 14 reduziert und dadurch das Ammoniak im zweiten Kanal 14 verdampft. Das durch die Strahlpumpe 50 geförderte Ammoniak wird in einem Wärmetauscher 130 kondensiert und in den Kondensatspeicher 66 zurückgeführt.

Wird eine Temperatur an einer Meßstelle 82 erfaßt, die andeutet, daß das Ammoniak im zweiten Kanal 14 vollständig oder zumindest weitgehend verdampft ist, wird die Treibstrahlpumpe 80 abgeschaltet und die Ventile 84, 86 werden geschlossen. Um ausschließlich Wärme über einen Wärmetauscher 132 an einen nicht näher dargestellten Verbraucher abzuführen, wird anschließend nur das Ventil 94 geöffnet. Um elektrische Energie mit einer Turbine 134 und einem Generator 62 zu erzeugen, werden die Ventile 96 und 98 geöffnet.

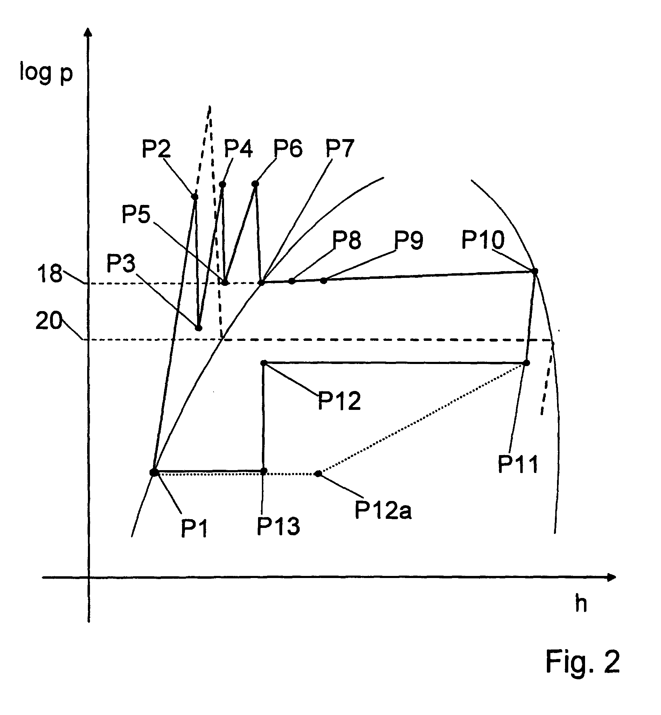

Während des Betriebs der Vorrichtung wird flüssiges Ammoniak aus dem Kondensatspeicher 66 über die Ventile 126 und 92 in den ersten Kanal 10 geleitet. In einem ersten Bereich 48 des ersten Kanals 10 ist das Ammoniak flüssig. Vom Ausgangspunkt P1 im oberen Bereich der sich einstellenden Flüssigkeitssäule im ersten Kanal 10 nimmt der Druck p infolge der Schwerkraft nach unten zu, und zwar beträgt der Druck p im Punkt P1 ca. 25 bar und im Punkt P2 bei der Tiefe von 1650 m ca. 100 bar (Fig. 2). Durch die Drosselstelle 22 bei der Tiefe von 1650 m wird der Druck p gedrosselt. Nach der Drosselstelle 22 beträgt der Druck p in P3 ca. 45 bar. Von P3 auf P4 nimmt der Druck p infolge der Schwerkraft der Flüssigkeitssäule zu und beträgt in P4 bei der Tiefe von 2850 m ca. 105 bar. Von P4 auf P5 wird der Druck p durch die zweite Drosselstelle 24 bei der Tiefe von 2850 m gedrosselt. Von P5 auf P6 erhöht sich der Druck p auf ca. 105 bar bei der Tiefe von 3850 m. Von P6 auf P7 wird der Druck p durch die dritte Drosselstelle 26 bei der Tiefe von 3850 m auf einen Verdampfungsdruck 18 von ca. 60 bar gedrosselt. Zwischen den Drosselstellen 22, 24, 26 wird dem Ammoniak stets Wärme aus dem Erdreich zugeführt, wodurch die Enthalpie h zwischen den Drosselstellen 22, 24, 26 zunimmt.

Von P7 nach P8 nimmt die Enthalpie h bei konstantem Druck p infolge der Druckenergie, von P8 nach P9 infolge der Abkühlung des überhitzten Ammoniaks und von P9 nach P10 infolge der Wärmezuführung vom Erdreich zu. Um einen guten Wärmeübergang vom Erdreich auf das Ammoniak zu erreichen, sind im ersten Kanal 10 nach der untersten Drosselstelle 26 Füllkörper 34 eingebracht (Fig. 1). Das Ammoniak ist im Punkt P10 bei einer Tiefe von ca. 4600 m vollständig verdampft und kann vom ersten Kanal 10 über die Öffnungen 136, 138 im Hüllrohr 56 und im Innenrohr 46 in den zweiten Kanal 14 strömen (Fig. 1). Um zu vermeiden, daß das Ammoniakgas im Ringspalt 58, zwischen dem Hüllrohr 56 und dem Innenrohr 46, nach oben steigt, ist der Ringspalt 58 mit einem Verschlußteil 38 oberhalb der Öffnungen 136, 138 in Richtung Erdoberfläche verschlossen. Das Verschlußteil 38 wird entsprechend dem Flansch 40 der Drosselstellen 22, 24, 26 vor dem Einführen in die Tiefenbohrung 36 befestigt. Das Ammoniakgas strömt im zweiten Kanal 14 nach oben zur Erdoberfläche. Der Druck p und die Enthalpie h nehmen von P10 nach P11 ab. Im Punkt P11 besitzt das Ammoniakgas ca. 40 bar, d.h. ca. 15 bar mehr als im Ausgangspunkt P1. Der Energieüberschuß von P11 zu P1 kann zur Wärmeabfuhr an Verbraucher genutzt werden - P11-P12-P13-P1 - oder kann zur Erzeugung elektrischer Energie und zur Wärmeabfuhr genutzt werden - P11-P12a-P1 -. Es entsteht ein geschlossener, rechtsläufiger Kreisprozeß. Anstatt mit mehreren Drosselstellen 22, 24, 26 kann die Vorrichtung auch nur mit einer Drosselstelle betrieben werden. In Fig. 2 ist mit einer gestrichelten Linie ein Verfahrensablauf einer Vorrichtung mit nur einer Drosselstelle dargestellt. Das Ammoniak wird im Vergleich zu mehreren Drosselstellen auf einen geringen Verdampfungsdruck 20 gedrosselt.

Zur Leistungsregelung kann der Zulauf vom Kondensatspeicher 66 in den ersten Kanal 10 über das Ventil 126 geregelt werden. Dabei sollte die Flüssigkeitssäule nicht unter die erste Drosselstelle 22 sinken. Um die Vorrichtung abzustellen, kann entweder die Zufuhr vom Kondensatspeicher 66 zum ersten Kanal 10 unterbrochen werden und/oder es kann aus dem Kondensatspeicher 66 das flüssige Ammoniak über eine Pumpe 44 in das Innenrohr 46 gepumpt werden, wodurch die Vorrichtung besonders schnell abgeschaltet werden kann. Ferner kann die Pumpe 44 zur Neuinbetriebnahme genutzt werden.

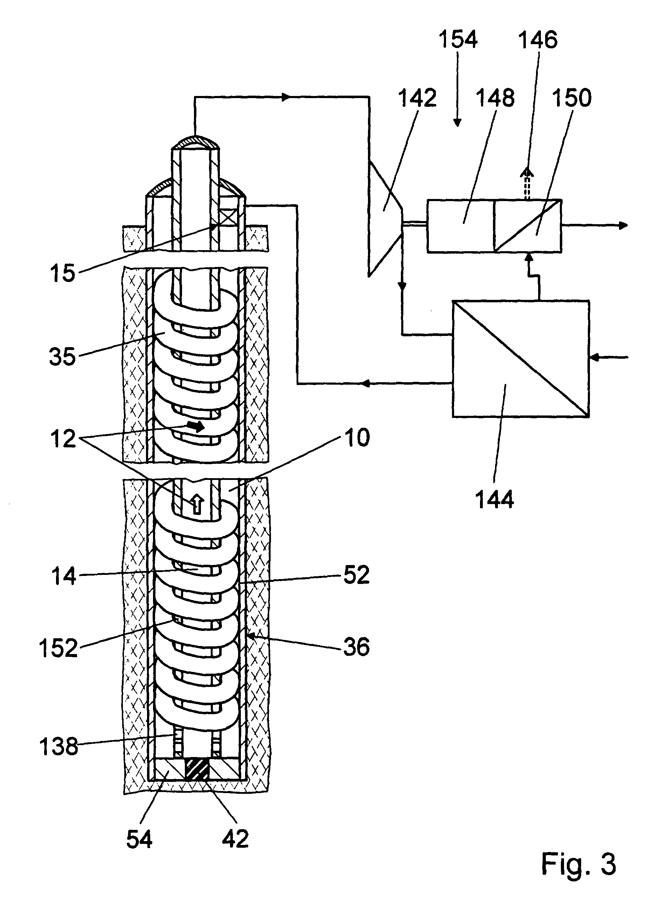

Fig. 3 zeigt eine Variante zu der in Fig. 1 dargestellten Vorrichtung. Im wesentlichen gleichbleibende Bauteile sind grundsätzlich mit den gleichen Bezugszeichen beziffert. Die Vorrichtung besitzt einen ersten Kanal 10, durch den der Arbeitsstoff 12 nach unten ins Erdinnere und einen zweiten Kanal 14, durch den der Arbeitsstoff 12 nach oben, in Richtung Erdoberfläche geleitet wird. Der erste Kanal 10 wird von einem Außenrohr 52 gebildet, das in eine Tiefenbohrung 36 eingefügt ist und die Tiefenbohrung 36 nach außen stoffdicht auskleidet. Das Außenrohr 52 ist am unteren Ende, an seiner Stirnseite dicht verschlossen. Der erste Kanal 10 wird radial nach innen durch ein konzentrisch zum Außenrohr 52 angeordnetes Innenrohr 152 begrenzt, das den zweiten Kanal 14 bildet. Im ersten Kanal 10, zwischen den Rohren 52 und 152, ist eine sich nach unten spiralförmig erstreckende Bahn 35 eingebracht, die den Arbeitsstoff 12 an die Außenwand des ersten Kanals 10 bzw. an die Innenfläche des Außenrohrs 52 lenkt. Die Bahn 35 dient zudem als Abstandhalter zwischen den Rohren 52 und 152. Die Bahn 35 kann sich über die gesamte Länge des Kanals 10 erstrecken oder kann vorteilhaft in einzelnen Längenabschnitten angeordnet werden, zwischen denen sich ein Abstand befindet. Die Bahn 35 übernimmt im ersten Kanal 10 keine Dichtfunktion. Der erste und der zweite Kanal 10, 14 sind gemeinsam mit einer Anlage 154 zu einem geschlossenen System verbunden, so daß der als Arbeitsstoff 12 verwendete Ammoniak nicht nach außen treten kann.

Das im zweiten Kanal 14 nach oben strömende, dampfförmige Ammoniak wird in einem dem zweiten Kanal 14 nachgeschalteten Verdichter 142 komprimiert, und zwar auf ca. 25 bar und dabei auf ca. 130°C erhitzt bzw. überhitzt. In einem dem Verdichter 142 nachgeschalteten Wärmetauscher 144 wird Heizungswasser in drei Phasen erwärmt, und zwar in einer ersten Phase durch Abkühlen des Ammoniaks auf eine Kondensationstemperatur, in einer zweiten Hauptphase durch Kondensieren des Ammoniaks und in einer dritten Phase durch Abkühlung des Kondensats. Das Heizungswasser wird in einem dem Wärmetauscher 144 nachgeschalteten Abgaswärmetauscher 150 durch Abgase 146 eines Motors 148 des Verdichters 142 weiter erhitzt.

Der Arbeitsstoff 12 besitzt nach dem Wärmetauscher ca. 45°C und wird nach dem Wärmetauscher 144 über einen im oberen Bereich des ersten Kanals 10 angeordneten Drosselbereich 15 bzw. über eine Drosselstelle geleitet und dabei von ca. 25 bar auf einen Verdampfungsdruck von ca. 4 bar gedrosselt. Der Drosselbereich 15 bzw. eine Drosselstelle kann auch in einer Leitung vor dem ersten Kanal 10 angeordnet sein.

Der Arbeitsstoff 12 kühlt sich durch die Drosselung auf ca. 0°C ab. Der flüssige Arbeitsstoff 12 wird durch die Bahn 35 nach unten und durch die Fliehkraft an die Außenwand des ersten Kanals 10 geleitet, an der eine Filmverdampfung entsteht. Der verdampfte Arbeitsstoff 12 wird durch eine sich einstellende Gesamtdurchströmung im ersten Kanal 10 nach unten und im zweiten Kanal 14 nach oben geleitet. Im ersten und im zweiten Kanal 10, 14 besitzt der Arbeitsstoff 12 im wesentlichen gleichbleibend seine Verdampfungstemperatur von ca. 0°C. Es kann ein besonders guter Wärmeübergang vom Erdinneren auf den Arbeitsstoff 12 erreicht und zudem eine Isolierung zwischen dem ersten Kanal 10 und dem zweiten Kanal 14 eingespart werden.

### Bezugszeichen

- 10: Kanal
- 12: Arbeitsstoff
- 14: Kanal
- 15: Drosselbereich
- 16: Drosselbereich
- 18: Verdampfungsdruck
- 20: Verdampfungsdruck
- 22: Drosselstelle
- 24: Drosselstelle
- 26: Drosselstelle
- 28: Rohr
- 30: Rohr
- 32: Rohr
- 34: Füllkörper
- 35: Bahn
- 36: Tiefenbohrung
- 38: Verschlußteil
- 40: Flansch
- 42: Kunststoffplatte
- 44: Pumpe
- 46: Innenrohr
- 48: Bereich
- 50: Pumpe
- 52: Außenrohr
- 54: Stahlplatte
- 56: Hüllrohr
- 58: Ringspalt
- 60: Anlage
- 62: Generator
- 64: Leitung
- 66: Kondensatspeicher
- 68: Leitung
- 70: Leitung
- 72: Ventil
- 74: Ventil
- 76: Ventil
- 78: Füllstandsmesser
- 80: Treibstrahlpumpe
- 82: Meßstelle
- 84: Ventil
- 86: Ventil
- 88: Ventil
- 90: Ventil
- 92: Ventil
- 94: Ventil
- 96: Ventil
- 98: Ventil
- 100: Ventil
- 102: Ventil
- 104: Ventil
- 106: Ventil
- 108: Ventil
- 110: Ventil
- 112: Ventil
- 120: Ventil
- 122: Ventil
- 124: Ventil
- 126: Ventil
- 128: Ventil
- 130: Wärmetauscher
- 132: Wärmetauscher
- 134: Turbine
- 136: Öffnung
- 138: Öffnung
- 140: Ventil
- 142: Verdichter
- 144: Wärmetauscher
- 146: Abgas
- 148: Motor
- 150: Abgaswärmetauscher
- 152: Innenrohr
- 154: Anlage
- P1: Zustandspunkt
- P2: Zustandspunkt
- P3: Zustandspunkt
- P4: Zustandspunkt
- P5: Zustandspunkt
- P6: Zustandspunkt
- P7: Zustandspunkt
- P8: Zustandspunkt
- P9: Zustandspunkt
- P10: Zustandspunkt
- P11: Zustandspunkt
- P12: Zustandspunkt
- P12a: Zustandspunkt
- P13: Zustandspunkt
- p: Druck
- h: Enthalpie

## Patentansprüche

1. Vorrichtung zur Nutzung von Erdwärme und zur Energiegewinnung mit zumindest einem ersten Kanal (10), durch den ein Arbeitsstoff (12) nach unten ins Erdinnere, in eine Tiefenbohrung (36) und mit zumindest einem zweiten Kanal (14), durch den der Arbeitsstoff (12) nach oben, in Richtung Erdoberfläche geleitet wird, wobei der erste und der zweite Kanal (10, 14) ein zum Erdreich geschlossenes System bilden,
**dadurch gekennzeichnet,**
**daß** der Arbeitsstoff (12) über zumindest einen Drosselbereich (15, 16) nach unten ins Erdinnere geleitet ist, der Arbeitsstoff (12) beim Nachuntenleiten mit der Umgebung im Wärmeaustausch steht, und der Drosselbereich (15, 16) den in Strömungsrichtung vor dem Drosselbereich (15, 16) weitgehend flüssigen Arbeitsstoff (12) auf einen Verdampfungsdruck (18, 20) drosselt, so daß der Arbeitsstoff (12) nach dem Drosselbereich (15, 16) weitgehend vollständig verdampfbar ist.

2. Vorrichtung nach Anspruch 1,
**dadurch gekennzeichnet,**
**daß** zur Druckerhöhung vor dem Drosselbereich (16) die auf eine vor dem Drosselbereich (16) aufgestaute Flüssigkeitssäule des Arbeitsstoffs (12) wirkende Schwerkraft genutzt ist.

3. Vorrichtung nach Anspruch 1 oder 2,
**dadurch gekennzeichnet,**
**daß** zur Druckerhöhung vor dem Drosselbereich eine Pumpe angeordnet ist.

4. Vorrichtung nach Anspruch 2 oder 3,
**dadurch gekennzeichnet,**
**daß** der Drosselbereich (16) von einer ersten und von zumindest einer zweiten Drosselstelle (22, 24, 26) gebildet ist, die in Strömungsrichtung zur ersten Drosselstelle (22) mit einem Abstand angeordnet ist.

5. Vorrichtung nach einem der vorhergehenden Ansprüche,
**dadurch gekennzeichnet,**
**daß** in Strömungsrichtung nach dem zweiten Kanal (14) ein Verdichter (142) angeordnet ist, über den der Arbeitsstoff (12) vor dem Drosselbereich (15) komprimierbar ist.

6. Vorrichtung nach Anspruch 5,
**dadurch gekennzeichnet,**
**daß** der Verdichter (142) in Strömungsrichtung vor zumindest einem Wärmetauscher (144) angeordnet ist.

7. Vorrichtung nach Anspruch 6,
**dadurch gekennzeichnet,**
**daß** Abgase (146) eines den Verdichter (142) antreibenden Motors (148) durch einen Abgaswärmetauscher (150) geleitet sind.

8. Vorrichtung nach einem der Ansprüche 5 bis 7,
**dadurch gekennzeichnet,**
**daß** der Drosselbereich (15) im oberen Bereich des nach unten führenden, ersten Kanals (10) angeordnet ist.

9. Vorrichtung nach einem der vorhergehenden Ansprüche,
**dadurch gekennzeichnet,**
**daß** der Drosselbereich (16) zumindest eine Drosselstelle (22, 24, 26) aufweist, die von wenigstens einem Rohr (28, 30, 32) gebildet ist.

10. Vorrichtung nach einem der vorhergehenden Ansprüche,
**dadurch gekennzeichnet,**
**daß** der erste und der zweite Kanal (10, 14) zu einem geschlossenen System verbunden sind.

11. Vorrichtung nach einem der vorhergehenden Ansprüche,
**dadurch gekennzeichnet,**
**daß** der Arbeitsstoff (12) im Vergleich zu Wasser bei gleichem Druck eine niedrigere Siedetemperatur besitzt.

12. Vorrichtung nach Anspruch 11,
**dadurch gekennzeichnet,**
**daß** der Arbeitsstoff (12) Ammoniak ist.

13. Vorrichtung nach einem der vorhergehenden Ansprüche,
**dadurch gekennzeichnet,**
**daß** zumindest nach dem Drosselbereich (16) im ersten Kanal (10) wenigstens ein den Arbeitsstoff (12) umlenkendes Element (34, 35) eingebracht ist.

14. Vorrichtung nach Anspruch 13,
**dadurch gekennzeichnet,**
**daß** in den ersten Kanal (10) den Arbeitsstoff (14) umlenkende Füllkörper (34) eingebracht sind.

15. Vorrichtung nach Anspruch 13,
**dadurch gekennzeichnet,**
**daß** in den ersten Kanal (10) zumindest eine spiralförmig nach unten verlaufende Bahn (35) eingebracht ist, über die der Arbeitsstoff (12) an die Außenwand des ersten Kanal (10) geleitet ist.

16. Vorrichtung nach einem der vorhergehenden Ansprüche,
**dadurch gekennzeichnet,**
**daß** der erste und der zweite Kanal (10, 14) in einer stoffdicht ausgekleideten Tiefenbohrung (36) angeordnet sind und der Arbeitsstoff (12) im radial äußeren Bereich innerhalb der Tiefenbohrung (36) nach unten und im radial inneren Bereich der Tiefenbohrung (36) durch ein Innenrohr (46, 152) nach oben geleitet ist.

17. Verfahren zur Betreibung einer Vorrichtung nach einem der vorhergehenden Ansprüche,
**dadurch gekennzeichnet,**
**daß** der in einem ersten Bereich (48) des ersten Kanals (10) weitgehend flüssige Arbeitsstoff (12) in einem zweiten Bereich (15, 16) auf einen Verdampfungsdruck (18, 20) gedrosselt, anschließend weitgehend vollständig verdampft und im dampfförmigen Zustand im zweiten Kanal (14) nach oben geleitet wird.

18. Verfahren nach Anspruch 17,
**dadurch gekennzeichnet,**
**daß** der Arbeitsstoff (12) im zweiten Bereich (16) von einer ersten und von zumindest einer zweiten Drosselstelle (22, 24, 26) in wenigstens zwei Schritten auf den Verdampfungsdruck (18) gedrosselt wird, wobei zwischen den Drosselstellen (22, 24, 26) dem Arbeitsstoff (12) Wärme zugeführt wird.

19. Verfahren nach Anspruch 17 oder 18,
**dadurch gekennzeichnet,**
**daß** bei einer Inbetriebnahme der Vorrichtung der Arbeitsstoff (12) über den zweiten Kanal (14) zugeführt wird.

20. Verfahren nach Anspruch 19,
**dadurch gekennzeichnet,**
**daß** bei der Inbetriebnahme nach Befüllen der Vorrichtung mit einer Pumpe (50) der Druck (p) im zweiten Kanal (14) reduziert und der Arbeitsstoff (12) im zweiten Kanal (14) verdampft wird.

## Claims

1. Device for utilizing the earth's heat and for energy recovery having at least one first duct (10), through which a working material (12) is conducted downwards into the earth's interior, into a deep-penetration bore (36), and having at least one second duct (14), through which the working material (12) is conducted upwards in the direction of the earth's surface, the first and the second duct (10, 14) forming a system which is closed with respect to the earth, **characterized in that** the working material (12) is conducted downwards into the earth's interior via at least one throttle region (15, 16), the working material (12), when being conducted downwards, is in heat exchange with the surroundings, and the throttle region (15, 16) throttles the working material (12), largely liquid upstream of the throttle region (15, 16) in the direction of flow, to an evaporation pressure (18, 20), so that, downstream of the throttle region (15, 16), the working material (12) can be evaporated largely completely.

2. Device according to Claim 1, **characterized in that** the gravitational force acting on a liquid column of the working material (12) which has built up upstream of the throttle region (16) is utilized for increasing the pressure upstream of the throttle region (16).

3. Device according to Claim 1 or 2, **characterized in that** a pump is arranged for increasing the pressure upstream of the throttle region.

4. Device according to Claim 2 or 3, **characterized in that** the throttle region (16) is formed by a first and by at least one second throttle point (22, 24, 26) which is arranged at a distance from the first throttle point (22) in the direction of flow.

5. Device according to one of the preceding claims, **characterized in that** a compressor (142), via which the working material (12) can be compressed upstream of the throttle region (15), is arranged downstream of the second duct (14) in the direction of flow.

6. Device according to Claim 5, **characterized in that** the compressor (142) is arranged upstream of at least one heat exchanger (144) in the direction of flow.

7. Device according to Claim 6, **characterized in that** exhaust gases (146) from a motor (148) driving the compressor (142) are conducted through an exhaust-gas heat exchanger (150).

8. Device according to one of Claims 5 to 7,
**characterized in that** the throttle region (15) is arranged in the upper region of the first duct (10) leading downwards.

9. Device according to one of the preceding claims, **characterized in that** the throttle region (16) has at least one throttle point (22, 24, 26) which is formed by at least one tube (28, 30, 32).

10. Device according to one of the preceding claims, **characterized in that** the first and the second duct (10, 14) are connected to form a closed system.

11. Device according to one of the preceding claims,
**characterized in that** the working material (12) possesses, for the same pressure, a lower boiling temperature than water.

12. Device according to Claim 11, **characterized in that** the working material (12) is ammonia.

13. Device according to one of the preceding claims, **characterized in that** at least one element (34, 35) deflecting the working material (12) is introduced in the first duct (10) at least downstream of the throttle region (16).

14. Device according to Claim 13, **characterized in that** filling bodies (34) deflecting the working material (14) are introduced into the first duct (10).

15. Device according to Claim 13, **characterized in that** at least one web (35), which runs spirally downwards and via which the working material (12) is conducted onto the outer wall of the first duct (10), is introduced into the first duct (10).

16. Device according to one of the preceding claims, **characterized in that** the first and the second duct (10, 14) are arranged in a deep-penetration bore (36) lined in a material-tight manner, and the working material (12) is conducted downwards within the deep-penetration bore (36) in the radially outer region and is conducted upwards through an inner tube (46, 152) in the radially inner region of the deep-penetration bore (36).

17. Method for operating a device according to one of the preceding claims, **characterized in that** the working material (12), largely liquid in a first region (48) of the first duct (10), is throttled to an evaporation pressure (18, 20) in a second region (15, 16), is subsequently evaporated largely completely, and in the vaporous state is conducted upwards in the second duct (14).

18. Method according to Claim 17, **characterized in that** the working material (12) is throttled in the second region (16) to the evaporation pressure in at least two steps by a first and by at least one second throttle point (22, 24, 26), heat being supplied to the working material (12) between the throttle points (22, 24, 26).

19. Method according to Claim 17 or 18, **characterized in that**, when the device is put into operation, the working material (12) is supplied via the second duct (14).

20. Method according to Claim 19, **characterized in that**, when the device is put into operation after being filled, the pressure (p) in the second duct (14) is reduced by means of a pump (50) and the working material (12) is evaporated in the second duct (14).

## Revendications

1. Dispositif pour l'utilisation de l'énergie géothermique et pour l'obtention d'énergie, comprenant au moins un premier conduit (10), à travers lequel une substance de travail (12) est conduite vers le bas à l'intérieur de la terre, dans un forage profond (36) et comprenant au moins un deuxième conduit (14), à travers lequel la substance de travail (12) est conduite vers le haut, dans la direction de la surface terrestre, les premier et deuxième conduits (10, 14) formant un système fermé par rapport à la terre,
**caractérisé en ce que**
la substance de travail (12) est conduite vers le bas à l'intérieur de la terre par le biais d'au moins une région d'étranglement (15, 16), la substance de travail (12) se trouve en échange thermique avec l'environnement lorsqu'elle est conduite vers le bas, et la région d'étranglement (15, 16) comprime la substance de travail (12) essentiellement liquide dans le sens de l'écoulement avant la région d'étranglement (15, 16), à une pression d'évaporation (18, 20), de sorte que la substance de travail (12) puisse être évaporée pratiquement complètement après la région d'étranglement (15, 16).

2. Dispositif selon la revendication 1,
**caractérisé en ce que**
pour l'augmentation de la pression avant la région d'étranglement (16), on utilise la force de pesanteur agissant sur une colonne de liquide de la substance de travail (12) refoulée avant la région d'étranglement (16).

3. Dispositif selon la revendication 1 ou 2,
**caractérisé en ce que**
pour l'augmentation de la pression, on dispose une pompe avant la région d'étranglement.

4. Dispositif selon la revendication 2 ou 3,
**caractérisé en ce que**
la région d'étranglement (16) est formée par une première et au moins une deuxième zones d'étranglement (22, 24, 26), qui est disposée à une certaine distance de la première zone d'étranglement (22) dans le sens de l'écoulement.

5. Dispositif selon l'une quelconque des revendications précédentes,
**caractérisé en ce qu'**
un compresseur (142) est disposé dans le sens de l'écoulement après le deuxième conduit (14), lequel permet de comprimer la substance de travail (12) avant la région d'étranglement (15).

6. Dispositif selon la revendication 5,
**caractérisé en ce que**
le compresseur (142) est disposé, dans le sens de l'écoulement, avant au moins un échangeur de chaleur (144).

7. Dispositif selon la revendication 6,
**caractérisé en ce que**
les gaz d'échappement (146) d'un moteur (148) entraînant le compresseur (142) sont conduits par un échangeur de chaleur pour gaz d'échappement (150).

8. Dispositif selon l'une quelconque des revendications 5 à 7,
**caractérisé en ce que**
la région d'étranglement (15) est disposée dans la région supérieure du premier conduit (10) conduisant vers le bas.

9. Dispositif selon l'une quelconque des revendications précédentes,
**caractérisé en ce que**
la région d'étranglement (16) présente au moins une zone d'étranglement (22, 24, 26) qui est formée par au moins un tube (28, 30, 32).

10. Dispositif selon l'une quelconque des revendications précédentes,
**caractérisé en ce que**
le premier et le deuxième conduits (10, 14) sont connectés pour former un système fermé.

11. Dispositif selon l'une quelconque des revendications précédentes,
**caractérisé en ce que**
la substance de travail (12) possède, par comparaison avec l'eau, pour une même pression, une température d'ébullition inférieure.

12. Dispositif selon la revendication 11,
**caractérisé en ce que**
la substance de travail (12) est de l'ammoniaque.

13. Dispositif selon l'une quelconque des revendications précédentes,
**caractérisé en ce qu'**
au moins un élément (34, 35) déviant la substance de travail (12) est monté au moins après la région d'étranglement (16) dans le premier conduit (10).

14. Dispositif selon la revendication 13,
**caractérisé en ce que**
des corps de remplissage (34) déviant la substance de travail (14) sont montés dans le premier conduit (10).

15. Dispositif selon la revendication 13,
**caractérisé en ce qu'**
au moins une bande (35) s'étendant vers le bas en forme de spirale est montée dans le premier conduit (10), laquelle conduit la substance de travail (12) contre la paroi extérieure du premier conduit (10).

16. Dispositif selon l'une quelconque des revendications précédentes,
**caractérisé en ce que**
le premier et le deuxième conduits (10, 14) sont disposés dans un forage profond (36) garni de manière étanche aux matières, et la substance de travail (12) est conduite vers le bas dans la région externe radialement à l'intérieur du forage profond (36) et dans la région interne radialement du forage profond (36) vers le haut à travers un tube interne (46, 152).

17. Procédé pour faire fonctionner un dispositif selon l'une quelconque des revendications précédentes,
**caractérisé en ce que**
la substance de travail (12) essentiellement liquide dans une première région (48) du premier conduit (10) est comprimée dans une deuxième région (15, 16) à une pression d'évaporation (18, 20), ensuite est essentiellement complètement évaporée et est conduite vers le haut dans le deuxième conduit (14) à l'état de vapeur.

18. Procédé selon la revendication 17,
**caractérisé en ce que**
la substance de travail (12) est comprimée dans la deuxième région (16) par une première et au moins une deuxième zones d'étranglement (22, 24, 26) dans au moins deux étapes à la pression d'évaporation (18), de la chaleur étant fournie à la substance de travail (12) entre les zones d'étranglement (22, 24, 26).

19. Procédé selon la revendication 17 ou 18,
**caractérisé en ce que**
lors d'une mise en service du dispositif, la substance de travail (12) est amenée par le biais du deuxième conduit (14).

20. Procédé selon la revendication 19,
**caractérisé en ce que**
lors de la mise en service après le remplissage du dispositif, la pression (p) dans le deuxième conduit (14) est réduite avec une pompe (50) et la substance de travail (12) est évaporée dans le deuxième conduit (14).
